Europäisches Patentamt

European Patent Office

Office européen des brevets

(19)

(11) Veröffentlichungsnummer: **0 022 928**

**A1**

(12) # EUROPÄISCHE PATENTANMELDUNG

(21) Anmeldenummer: **80103299.6**

(22) Anmeldetag: **13.06.80**

(51) Int. Cl.³: **F 16 G 1/28**
**B 29 H 7/22**

(30) Priorität: **24.07.79 DE 2929904**

(43) Veröffentlichungstag der Anmeldung:
**28.01.81 Patentblatt 81/4**

(84) Benannte Vertragsstaaten:
**BE CH FR GB IT LI NL SE**

(71) Anmelder: **Norddeutsche Seekabelwerke**
**Aktiengesellschaft**
**Kabelstrasse**
**D-2890 Nordenham(DE)**

(72) Erfinder: **Rabenecker, Klaus, Ing. grad.**
**Bernhardstrasse 80**
**D-2890 Nordenham(DE)**

(72) Erfinder: **Winkelmann, Claus**
**Bernhardstrasse 38**
**D-2890 Nordenham(DE)**

(74) Vertreter: **Meissner & Bolte Patentanwälte**
**Slevogtstrasse 21**
**D-2800 Bremen(DE)**

(54) **Profilriemen mit zugfester Einlage.**

(57) Die Erfindung betrifft einen Profilriemen (1), insbesondere einen Zahnriemen, mit in Längsrichtung verlaufender zugfester Einlage (2), der besonders hohen Ansprüchen gewachsen ist. Der Riemen (1) ist dadurch gekennzeichnet, daß die zugfeste Einlage (2) aus einem perforierten Metall- oder Textilband besteht. Ferner besteht eine Erfindung darin, eaß die zugfeste Einlage (2) durch eine Haftschicht (4) aus Copolymer innig und fest mit einem umschliessenden Profilriemen (1) aus Kunststoff bzw. Kautschuk verbunden ist.

Fig. 1

Fig. 2

EP 0 022 928 A1

Profilriemen mit zugfester Einlage

Die Erfindung betrifft einen Profilriemen, insbesondere
Zahnriemen, mit zugfester Einlage in Längsrichtung.

Bei Profilriemen, insbesondere Zahnriemen, die einer
hohen Beanspruchung gewachsen sein sollen, ist es vor
allem wichtig, daß zwischen dem Material, aus welchem
der Riemenkörper mit den Profilen hergestellt ist,
und der Einlage bzw. dem Material der Einlage eine
innige Verbindung besteht, damit die Zugkräfte von den
Zähnen auf die Einlage übertragen werden können, ohne
daß die Einlage in dem Zahnriemen wandert.

Bei den bisher bekannten Profilriemen ist diese innige
Verbindung nicht immer in dem gewünschten Ausmaß gegeben.

Die vorliegende Erfindung macht es sich daher zur Aufgabe, einen Profilriemen, insbesondere einen Zahnriemen
mit zugfester Einlage vorzuschlagen, bei dem zwischen
Riemenmaterial und Einlage eine so innige Verbindung
besteht, daß der Riemen allen gewünschten Beanspruchungen

- 2 -    11. Juni 1980

gewachsen ist.

Zur Lösung der erfindungsgemäßen Aufgabe wird ein Profilriemen mit in Längsrichtung verlaufender zugfester Einlage vorgeschlagen, der dadurch gekennzeichnet ist, daß die zugfeste Einlage aus einem perforierten Metall- oder Textilband besteht. Ferner besteht auch eine Erfindung darin, daß die zugfeste Einlage durch eine Haftschicht aus Copolymer innig und fest mit einem umschließenden Profilriemen aus Kunststoff bzw. Kautschuk verbunden ist.

Der die Zähne bildende Teil des Profil- bzw. Zahnriemens soll dabei aus extrudierbarem Kunststoff oder vulkanisierbarem Gummi bestehen.

Durch die Perforierungen in dem als zugfeste Einlage eingebetteten Metall- oder Textilband wird erreicht, daß der während des Herstellungsverfahrens plastische Kunststoff bzw. Kautschuk durch die Perforationslöcher in der Einlage hindurchgeht, wodurch eine innige und feste Haftung zwischen Einlage und Kunststoff bzw. Kautschuk erzielt wird.

Dadurch, daß ferner erfindungsgemäss zwischen der zugfesten Einlage und dem Profilriemen aus Kunststoff bzw. Kautschuk eine Haftschicht aus Copolymer vorgesehen ist, wird ebenfalls eine innige und feste Verbindung zwischen beiden Teilen erzielt. Die Haftschicht besteht entweder aus einem Copolyamid, bei dem die polaren Gruppen, bedingt durch den chemischen Aufbau des Polyamids, eine sehr gute Haftung zum Metall- bzw. Textilband hervorrufen, z.B. die Type Vestamid T 171 der Firma CWH, oder aus einem
Copolymerisat auf Äthylenbasis mit einem Anteil von
Acrylsäure, wobei die Carboxylgruppen der Acrylsäure
die sehr gute Haftung zum Metall bewirken, z. B. die
Type A 2910 MX der Firma BASF.

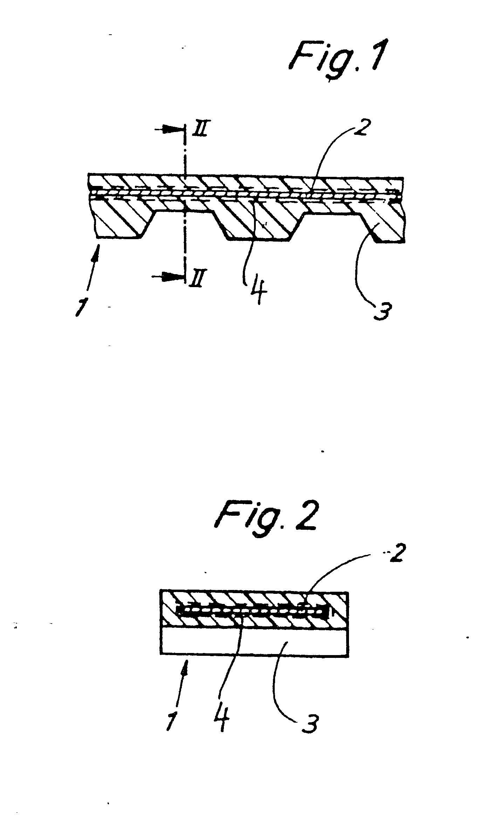

Zur weiteren Erläuterung der Erfindung wird auf die
beigefügte Zeichnung verwiesen, in welcher in Figur 1
ein Längsschnitt durch einen Riemen gemäß der Erfindung und in Figur 2 ein Querschnitt gemäss
Linie II-II der Figur 1 durch einen solchen Riemen
dargestellt ist.

In den Figuren erkennt man die zugfeste, vorzugsweise
perforierte, bandförmige Einlage, die mit 2 bezeichnet
ist. Die Zähne des Riemens 1 sind mit dem Bezugszeichen
3 bezeichnet. Die gestrichelte Haftschicht hat das
Bezugszeichen 4.

## Ansprüche

1.    Profilriemen, insbesondere Zahnriemen, mit in Längsrichtung verlaufender zugfester Einlage, dadurch gekennzeichnet, daß die zugfeste Einlage (2) aus einem perforierten Metall- oder Textilband besteht.

2.    Profilriemen, insbesondere Zahnriemen, mit in Längsrichtung verlaufender zugfester Einlage, vorzugsweise nach Anspruch 1, dadurch gekennzeichnet, daß die zugfeste Einlage (2) durch eine Haftschicht (4) aus Copolymer innig und fest mit einem umschliessenden Profilriemen (1) aus Kunststoff bzw. Kautschuk verbunden ist.

Fig.1

Fig.2

0022928

**Europäisches Patentamt**

**EUROPÄISCHER RECHERCHENBERICHT**

Nummer der Anmeldung

EP 80 10 3299

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>DE - A - 2 227 335</u> (CIGALA & BERTINETTI) <br><br> * Abbildungen 1-3,7; Seite 5, Zeile 12 bis Seite 6, Zeile 9; Seite 6, Zeilen 28-31 * <br><br> -- | 1,2 |
| X | <u>FR - A - 1 099 528</u> (COMPAGNIE DES TRANSMISSIONS MECANIQUES SEINE-DOUBS-ISERE) <br><br> * Das ganze Dokument * <br><br> -- | 1 |
| X | <u>CH - A - 155 854</u> (VIKTOR ALLEN-SPACH) <br><br> * Abbildungen 6,7; Seite 2, linke Spalte, Zeilen 17-26 * <br><br> -- | 1 |
| | <u>DE - C - 521 817</u> (A.W. KANISS GmbH) <br> * Das ganze Dokument * <br><br> -- | 1,2 |
| | <u>GB - A - 681 872</u> (CONTINENTAL GUMMIWERKE AKTIENGESELLSCHAFT) <br><br> * Abbildung 1; Seite 1, Zeilen 10-42 * <br><br> -- | 1 |
| | <u>FR - A - 1 051 504</u> (GIUSEPPE RIGHINO) <br><br> * Abbildung 1; Seite 2, linke Spalte , Zeilen 25-41 * <br><br> -- | 1 |
| | <u>FR - A - 2 257 204</u> (PNEUMATIQUES <br> ./. | 2 |

**KLASSIFIKATION DER ANMELDUNG (Int.Cl.)**

F 16 G 1/28
B 29 H 7/22

**RECHERCHIERTE SACHGEBIETE (Int. Cl.)**

F 16 G
B 29 H

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 03-10-1980 | JAIK |

EPA form 1503.1   06.78

# 0022928

Europäisches Patentamt

## EUROPÄISCHER RECHERCHENBERICHT

Nummer der Anmeldung

EP 80 10 3299
-2-

## EINSCHLÄGIGE DOKUMENTE

| Kategorie | Kennzeichnung des Dokuments mit Angabe, soweit erforderlich, der Maßgeblichen Teile | betrifft Anspruch | KLASSIFIKATION DER ANMELDUNG (Int. Cl.³) |
|---|---|---|---|
| | CAOUT-CHOUC MANUFACTURE ET PLAS-TIQUES KLEBER COLOMBES)<br><br>* Abbildungen 1,2; Seite 4, Zeilen 12-32 *<br><br>--<br><br>US - A - 2 211 607 (THE B.F. GOODRICH COMP.)<br><br>* Abbildung 2; Seite 1, rechte Spalte, Zeilen 22-30 *<br><br>--<br><br>DE - C - 846 619 (HARRY BRAMMER)<br><br>* Das ganze Dokument *<br><br>----- | 1 | |
| | | | **RECHERCHIERTE SACHGEBIETE** (Int. Cl.³) |

EPA Form 1503.2  06.78